# EUROPEAN PATENT SPECIFICATION

(11) **EP 2 672 481 B1**
(45) Date of publication and mention of the grant of the patent: **01.07.2020**
(21) Application number: 13168125.6
(22) Date of filing: 16.05.2013
(51) Int. Cl.: G10L 15/22, G06F 3/16

(54) **Method of providing voice recognition service and electronic device therefore**
Verfahren zur Bereitstellung eines Spracherkennungsdiensts und elektronische Vorrichtung dafür
Procédé de fourniture de service de reconnaissance vocale et dispositif électronique correspondant

(30) Priority: 04.06.2012 KR 20120059785
(43) Date of publication of application: 11.12.2013
(73) Proprietor: Samsung Electronics Co., Ltd., Gyeonggi-do 443-742 (KR)
(72) Inventor: Kim, Joo-Hyun, Gyeonggi-do (KR); Cho, Young-Ik, Gyeonggi-do (KR)
(74) Representative: HGF Limited

(56) References cited:
- EP-A2- 1 705 554
- DE-A1-102007 024 110
- US-A1- 2004 260 562
- US-A1- 2007 088 556
- Gear Diary: "A Gear Diary First Look: Nuance Introduces Intelligent Search with Dragon Go! for iOS", , 13 July 2011 (2011-07-13), page 1, XP054975209, Retrieved from the Internet: URL:http://www.youtube.com/watch?v=46arKUS 3xCE [retrieved on 2013-09-11]

## Description

### TECHNICAL FIELD

The present disclosure relates to a method of providing a voice recognition service and an electronic device therefor.

### BACKGROUND

An electronic device provides a voice recognition service for providing convenience to a user who is driving a car or for whom it is difficult to operate the electronic device because he or she is disabled. Herein, the voice recognition service means that a service corresponding to a voice command input by the user is executed. For example, the electronic device includes voice indexes defined by a service provider which may provide the voice recognition service. If a voice command is input by the user, the electronic device verifies a voice index corresponding to the voice command input by the user among the voice indexes provided by the service provider. The electronic device executes an application program corresponding to the verified voice index. At this time, the electronic device may set a control mode corresponding to the voice index.

As described above, the electronic device provides a voice recognition service for the voice index defined by the service provider. Accordingly, there is inconvenience in that the user of the electronic device must know the voice index defined by the service provider accurately to use the voice recognition service.

If the user may add a voice command to use the voice recognition service, the electronic device adds the voice command input by him or her to a voice index for providing the voice recognition service. Therefore, there is inconvenience in that the user of the electronic device must register voice commands and services corresponding to the voice commands separately.

The "Dragon Go!" (TM) app for mobile devices is a voice activated "smart search" app that allows a user to access content and applications on his device and on the web in response to voice commands.

US 2007/0088556 discloses a voice recognition system and method for obtaining data to be included in a 'grammar' for use in the voice recognition system. The document discloses extracting 'grammar' information from search results for an application's name, from tool-tip information and words relation to the function of the application.

### SUMMARY

To address the above-discussed deficiencies, the present disclosure provides at least the advantages described below. Accordingly, the present disclosure provides an apparatus and method for providing a voice recognition service in an electronic device, as defined by the amended claims.

Aspects of the present disclosure provide an apparatus and method for generating a voice index list for voice recognition in an electronic device.

Aspects of the present disclosure provide an apparatus and method for generating a voice index list using index information of an application program in an electronic device.

Embodiments of the present disclosure provide an apparatus and method for displaying a list of application programs which are executable according to a voice command input by a user in an electronic device.

Embodiments of the present disclosure provide an apparatus and method for arranging and displaying lists of application programs which are executable according to a voice command input by a user in an electronic device.

Embodiments of the present disclosure provide an apparatus and method for updating a voice index list of application programs which are executed according to a voice command in an electronic device.

Embodiments of the present disclosure provide an apparatus and method for determining an additional service to be driven for the first time in an application program in consideration of a voice command in an electronic device.

In certain embodiments, a method includes providing a voice recognition service in an electronic. The method includes displaying one or more executable application programs corresponding to a voice command input through a microphone, determining an additional service to be driven in a selected application program in consideration of the voice command when the any one of the one or more application programs is selected, and displaying the additional service characterised in that determining the additional service comprises: verifying whether there is an additional service corresponding to the voice command in the selected application program; and determining the additional service to be driven in the selected application program in consideration of the voice command when there is the additional service corresponding to the voice command.

In certain aspects, a method includes providing a voice recognition service in an electronic device. The method includes extracting index information of one or more application programs installed in an electronic device and generating a voice index list of the one or more application programs using the index information.

In certain embodiments, an electronic device provides a voice recognition service. The electronic device includes one or more processors, a memory, and one or more programs, each of the one or more programs which is stored in the memory and is configured to be executable by the one or more processors, wherein each of the one or more programs includes one or more instructions for displaying one or more application programs which are executable according to a voice command input through a microphone, determining an additional service to be driven in a selected application program in consideration of the voice command when the any one of the one or more application programs is selected, and displaying the additional service.

In certain embodiments, an electronic device for provides a voice recognition service. The electronic device includes one or more processors, a memory, and one or more programs, each of the one or more programs which is stored in the memory and is configured to be executable by the one or more processors, wherein each of the one or more programs includes one or more instructions for extracting index information of one or more application programs installed therein and generating a voice index list of the one or more application programs using the index information.

Preferably, the device is one or more processors; a memory; and one or more programs, each of the one or more programs stored in the memory and configured to be executable by the one or more processors, wherein each of the one or more programs includes one or more instructions for: displaying one or more application programs that are executable according to a voice command input through a microphone, determining an additional service to be driven in a selected application program in consideration of the voice command when the any one of the one or more application programs is selected, and displaying the additional service.

Preferably, the device is wherein the instruction for determining the additional service includes an instruction for: verifying whether there is an additional service corresponding to the voice command in the selected application program, and determining the additional service to be driven in the selected application program based on the voice command when there is the additional service corresponding to the voice command.

Preferably, the device is further comprising an instruction for:
displaying a home picture of the selected application program when there is no additional service corresponding to the voice command.

Preferably, the device is further comprising an instruction for:
mapping the voice command with the additional service when any one additional service is selected on the home picture of the application.

Preferably, the device is further comprising an instruction for:
verifying the number of application programs which are executable according to the voice command, wherein the instruction for displaying the application programs includes an instruction for: displaying a plurality of application programs when there are the plurality of application programs which are executable according to the voice command.

Preferably, the device is further comprising an instruction for: executing one application program when there is the one application program which is executable according to the voice command.

Preferably, the device is wherein the instruction for displaying the plurality of application programs includes an instruction for: arranging the plurality of application programs that are executable according to the voice command, and displaying the plurality of arranged application programs.

Preferably, the device is further comprising an instruction for: adding the voice command to a voice index list of a selected application program when the any one of the one or more application programs is selected.

Preferably, the device is wherein the one or more processors include: a first processor for selecting any one of the one or more application programs that are executable according to the voice command; and a second processor for determining an additional service to be driven in the application program selected in the first processor.

Preferably, the device is wherein the first processor transmits information about the any one selected application program and the voice command to the second processor, and wherein the second processor determines the additional service to be driven in the selected application program in consideration of the voice command provided from the first processor.

Preferably, the device is one or more processors; a memory; and one or more programs, each of the one or more programs stored in the memory and configured to be executed by the one or more processors, wherein each of the one or more programs includes one or more instructions for: extracting index information of one or more application programs installed in the electronic device, and generating a voice index list of the one or more application programs using the index information.

Preferably, the device is further comprising an instruction for: verifying whether to generate a voice index list of the application program when the application program is installed, wherein the index information of the one or more application programs installed in the electronic device is extracted when the voice index list of the application program is generated.

Preferably, the device is wherein the index information includes: at least one of a title of an application program included in an application program package, and voice index information of a previously defined application program.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a configuration of an electronic device according to embodiments of the present disclosure
FIG. 2 illustrates a detailed configuration of a processor unit according to embodiments of the present disclosure;
FIG. 3 illustrates a detailed configuration of a processor unit according to embodiments of the present disclosure;
FIG. 4A illustrates a process of generating a voice index list of an application program in an electronic device according to aspects of the present disclosure;
FIG. 4B illustrates configuration of an electronic device for generating a voice index list of an application program according to aspects of the present disclosure;
FIG. 5A illustrates a process of executing an application program using a voice command in an electronic device according to aspects of the present disclosure;
FIG. 5B illustrates a configuration of an electronic device for executing an application program using a voice command in an electronic device according to aspects of the present disclosure;
FIG. 6 illustrates a process of executing an application program using a voice command in an electronic device according to embodiments of the present disclosure;
FIG. 7 illustrates a process of executing an application program using a voice command in an electronic device according to another embodiment of the present disclosure;
FIG. 8 illustrates a process of executing an application program using a voice command in an electronic device according to another embodiment of the present disclosure;
FIG. 9 illustrates a process of executing an application program using a voice command in an electronic device according to embodiments of the present disclosure;
FIG. 10 illustrates a process of executing an application program using a voice command in an electronic device according to embodiments of the present disclosure;
FIG. 11 illustrates process of executing an application program using a voice command in an electronic device according to embodiments of the present disclosure; and
FIGs. 12A to 12D include pictures illustrating a process of executing an application program using a voice command in an electronic device according to embodiments of the present disclosure.

### DETAILED DESCRIPTION

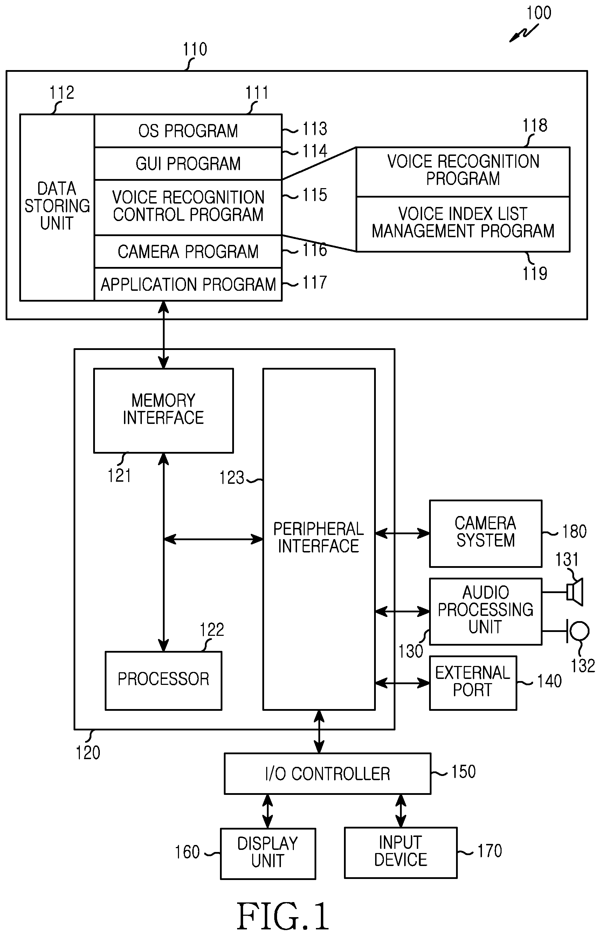

FIGURES 1 through 12D, discussed below, and the various embodiments used to describe the principles of the present disclosure in this patent document are by way of illustration only and should not be construed in any way to limit the scope of the disclosure. Those skilled in the art will understand that the principles of the present disclosure can be implemented in any suitably arranged mobile electronic communication device. Embodiments of the present disclosure will be described herein below with reference to the accompanying drawings. In the following description, well-known functions or constructions are not described in detail to avoid confusion or unnecessary detail.

Hereinafter, a description will be given for a method and apparatus for providing a voice recognition service in an electronic device.

The electronic device executes an application program or sets a control mode using a voice recognition service. Hereinafter, it is assumed that the electronic device executes the application program using the voice recognition service. However, the electronic device can set the control mode according to the same method as a method of executing the application program using the voice recognition service.

The electronic device can be any one of a mobile communication terminal, such as a Personal Digital Assistant (PDA), a laptop, a smart phone, a netbook, a television, a Mobile Internet Device (MID), a Ultra Mobile Personal Computer (UMPC), a tablet PC, a navigation device, a Moving Picture Experts Group (MPEG) layer 3 (MP3) player, etc.

FIG. 1 illustrates a configuration of an electronic device according to embodiments of the present disclosure.

As shown in FIG. 1, the electronic device denoted by 100 includes a memory 110, a processor unit 120, an audio processing unit 130, an external port 140, an Input/Output (I/O) controller 150, a display unit 160, an input device 170, and a camera system 180. In certain embodiments, the memory 110 and the external port 140 include a plurality of memories and external ports, respectively.

A description for respective components is as follows.

The memory 110 includes a program storing unit 111 for storing programs for controlling operations of the electronic device 100 and a data storing unit 112 for storing data items generated while the programs are executed. For example, the program storing unit 111 includes an Operating System (OS) program 113, a Graphic User Interface (GUI) program 114, a voice recognition control program 115, a camera program 116, and at least one application program 117. Herein, the programs included in the program storing unit 111 can be expressed in a set of instructions. Also, the programs are expressed in an instruction set or programs. For another example, the data storing unit 112 stores a voice index list of application programs in the electronic device 100.

The OS program 113 includes at least one software component for controlling a general system operation. Also, the OS program 113 performs a function for smoothly communicating between a plurality of hardware and software components.

The GUI program 114 includes at least one software component for providing a user interface between a user and the electronic device 100. That is, the GUI program 114 includes at least one software component for displaying user interface information on the display unit 160.

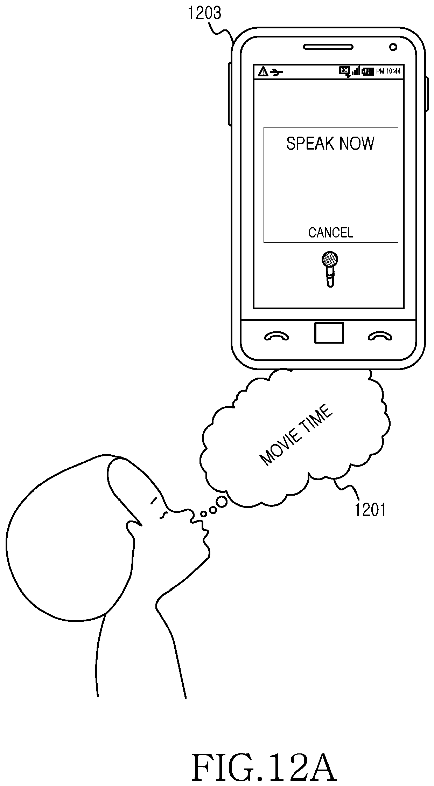

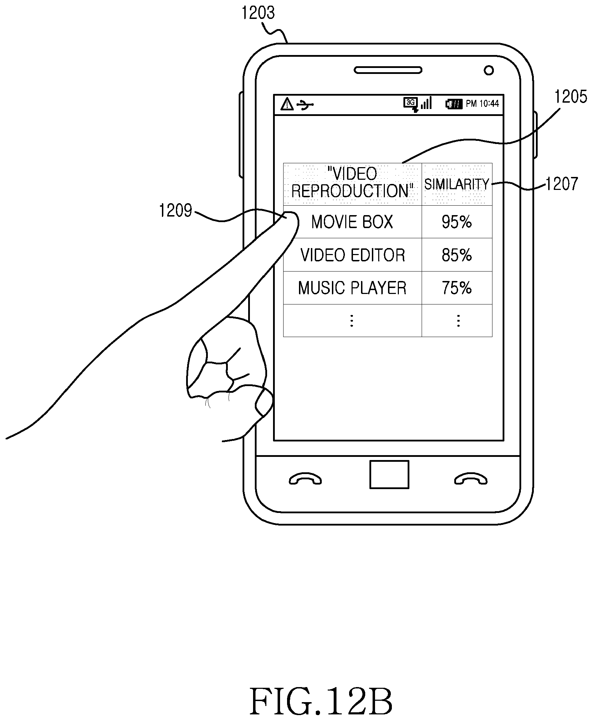

For example, the GUI program 114 displays an executable application program list selected by a voice recognition program 118 on the display unit 160. More particularly, as shown in FIG. 12A, when the user inputs a voice command 1201 such as a "movie time," the GUI program 114 displays, as shown in FIG. 12B, an executable application program list 1205 corresponding to the "movie time" voice command 1201 on the display unit 160. At this time, the GUI program 114 arranges and displays the application program list 1205. In certain embodiments, the GUI program 114 arranges and displays the application program list 1205 based on at least one of a similar degree with the "movie time" 1201, the frequency in execution of application programs, and a recent execution order of application programs.

For another example, the GUI program 114 displays a picture of an application program executed by the voice recognition program 118 on the display unit 160. More particularly, as shown in FIG. 12A, when the user inputs the voice command 1201 such as the "movie time," the GUI program 114 displays, as shown in FIG. 12B, a picture of a "Movie Box" 1209 on the executable application program list 1205 corresponding to the "movie time" voice command 1201 on the display unit 160. For another example, the GUI program 114 displays a picture for an additional service to be driven for the first time in an application program on the display unit 160 based on a voice command determined by the voice recognition program 118. More particularly, the GUI program 114 displays, as shown in FIG. 12B, a picture for an additional service to be driven for the first time in any one application program selected by the user on the executable application program list 1205 corresponding to the "movie time" voice command 1201.

The voice recognition control program 115 includes the voice recognition program 118 and a voice index list management program 119 to provide a voice recognition service.

The voice recognition program 118 includes at least one software component for executing an application program according to a voice command of the user, wherein the voice command is input from a microphone 132.

For example, as shown in FIG. 12A, when the user inputs the voice command 1201 such as the "movie time," the voice recognition program 118 verifies, as shown in FIG. 12B, at least the one executable application program list 1205 corresponding to the "movie time" voice command 1201. When the "Movie Box" 1209 on the executable application program list 1205 is selected by the user according to the "movie time" voice command 1201, the voice recognition program 118 executes the "Movie Box" 1209 selected by the user.

For another example, when there is an application program that has certain similarity or more with a voice command input by the user on a voice index list stored in the data storing unit 112, the voice recognition program 118 can execute an application program corresponding to the input voice command.

In addition, the voice recognition program 118 determines an additional service to be driven for the first time in an application program according to a voice command of the user, which is input from the microphone 132. For example, as shown in FIG. 12B, when the "Movie Box" 1209 on the executable application program list 1205 is selected by the user, the voice recognition program 118 executes the "Movie Box" 1209 in response to the "movie time" voice command 1201 input by the user and determines an additional service to be driven for the first time.

The voice index list management program 119 includes at least one software component for generating a voice recognition index list using index information of application programs in the electronic device 100. For one example, when a voice index list generation event is generated in the electronic device 100, the voice index list management program 119 extracts index information of application programs and generates a voice index list. For another example, when application programs are installed in the electronic device 100, the voice index list management program 119 extracts index information of the installed application programs and generates a voice index list. In certain aspects, the voice index list management program 119 extracts the index information of the installed application programs and verifies whether to generate a voice index list. In certain aspects, the index information includes a title of an application program included in an application program package, previously defined voice index information of the application program, etc.

In addition, the voice index list management program 119 updates a voice index list of application programs executed by the voice recognition program 118. For example, as shown in FIG. 12B, when the "Movie Box" 1209 on the executable application list 1205 is selected according to the "movie time" voice command 1201 input by the user, the voice index list management program 119 adds the "movie time" voice command 1201 to a voice index list of the "Movie Box" 1209.

The camera program 116 includes a software component for providing a camera service.

The application program 117 includes a software component for at least one application program installed in the electronic device 100.

The processor unit 120 includes a memory interface 121, at least one processor 122, and a peripheral interface 123. In certain embodiments, the memory interface 121, at least the one processor 122, and the peripheral interface 123 which are included in the processor unit 120 can be integrated in at least one Integrated Circuit (IC) or be implemented as separate components.

The memory interface 121 controls access to the memory 110 by a component such as the processor 122 or the peripheral interface 123.

The peripheral interface 123 controls connections among input and output peripherals of the electronic device 100, the processor 122, and the memory interface 121.

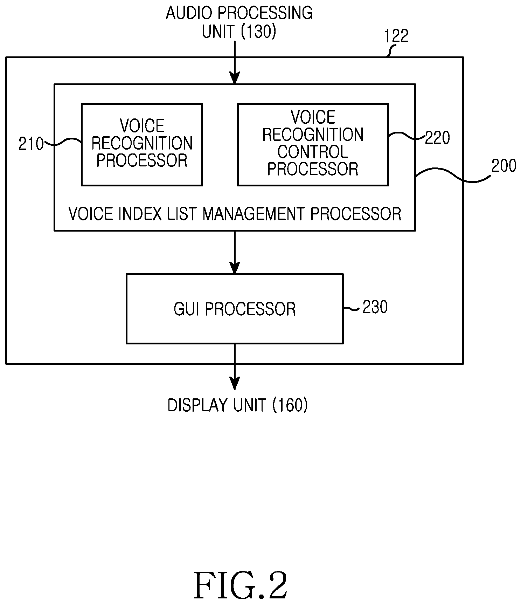

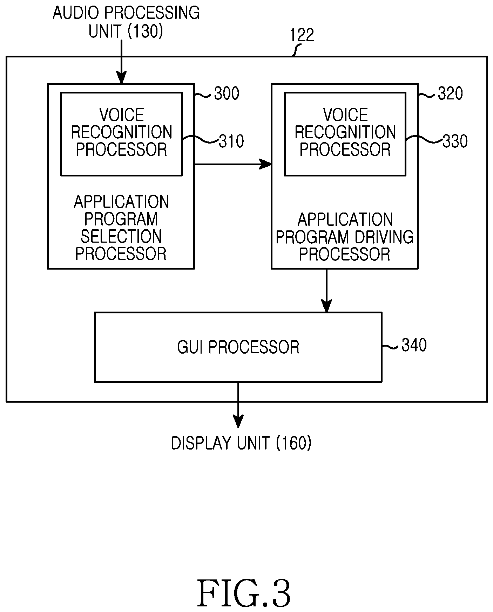

The processor 122 provides a variety of multimedia services using at least one software program. Herein, the processor 122 executes at least one program stored in the memory 110 and provides a service corresponding to the corresponding program. For one example, the processor 122 includes, as shown in FIG. 2, a voice recognition control processor 200 and a GUI processor 230. For another example, the processor 122 includes, as shown in FIG. 3, an application program selection processor 300, an application program driving processor 320, and a GUI processor 340.

The audio processing unit 130 provides an audio interface between the user and the electronic device 100 through a speaker 131 and a microphone 132.

The external port 140 includes a connection interface to connect the electronic device 100 to an external electronic device directly or connect it to another electronic device through a network. For example, the external port 140 includes a Universal Serial Bus (USB) port, a High Definition Multimedia Interface (HDMI) port, etc.

The I/O controller 150 provides an interface between input and output devices, such as the display device 160 and the input device 170, and the peripheral interface 123.

The display unit 160 displays state information of the electronic device 100, characters input by the user, moving pictures, still pictures, etc.

The display unit 160 can include a touch screen. In this case, the display unit 160 provides touch information of the touch screen to the processor unit 120 through the I/O controller 150.

The input device 170 provides input data generated by selection of the user to the processor unit 120 through the I/O controller 150. For one example, the input device 170 includes only a control button for controlling the electronic device 100. For another example, the input device 170 can include a keypad for receiving an input data from the user.

The camera system 180 performs a function for photographing moving picture data and still picture data.

Although it is not shown in FIG. 1, the electronic device 100 further includes a communication system for performing a communication function for voice and data communication. Herein, the communication system can be classified into a plurality of communication sub-modules, which support different communication networks. For example, the communication network can include be, but is not limited to, any one of a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a wireless LAN, a Bluetooth network, a Near Field Communication (NFC) network, etc.

FIG. 2 illustrates a detailed configuration of a processor according to embodiments of the present disclosure.

As shown in FIGs. 1 and 2, the processor 122 includes a voice recognition control processor 200 and a GUI processor 230.

The voice recognition control processor 200 includes a voice recognition processor 210 and a voice index list management processor 220 to provide a voice recognition service.

The voice recognition processor 210 executes the voice recognition program 118 of the program storing unit 111 and executes an application program according to a voice command of the user, which is received from the microphone 132. For one example, as shown in FIG. 12A, when the user inputs a voice command 1201 such as a "movie time," the voice recognition program 118 verifies, as shown in FIG. 12B, at least one executable application program corresponding to the input "movie time" voice command 1201. When a "Movie Box" 1209 on an executable application program list 1205 is selected according to the "movie time" voice command 1201 by the user, the voice recognition program 118 executes the "Movie Box" 1209 selected by the user. For another example, when there is an application that has certain similarity or more with the voice command 1201 input by the user on a voice index list stored in the data storing unit 112, the voice recognition program 118 executes an application program corresponding to the input voice command 1201.

The voice index list management processor 220 executes the voice index list management program 119 of the program storing unit 111 and generates a voice recognition index list using index information of the application program installed in the electronic device 100. For one example, when a voice index list generation event is generated in the electronic device 100, the voice index list management program 119 extracts index information of an application program and generates a voice index list. For another example, when application programs are installed in the electronic device 100, the voice index list management program 119 extracts index information of the installed application programs and generates a voice index list. In certain aspects, the voice index management program 119 extracts the index information of the installed application programs and verifies whether to generate a voice index list. In certain aspects, the index information includes a title of an application program included in an application program package, voice index information of a previously defined application program, etc. In addition, the voice index list management processor 220 executes the voice index list management program 119 of the program storing unit 111 and updates a voice index list of application programs executed by the voice recognition processor 210. For example, as shown in FIG. 12B, when the "Movie Box" 1209 on the executable application list 1205 is selected according to the "movie time" voice command 1201 input by the user, the voice index list management program 119 adds the "movie time" voice command 1201 to a voice index list of the "Movie Box" 1209.

The GUI processor 230 executes the GUI program 114 of the program storing unit 112 and provides a user interface between the user and the electronic device 100. For example, the GUI processor 230 executes the GUI program 114 of the program storage unit 111 and displays an executable application program list estimated by the voice recognition processor 210 on the display unit 160. In more detail, as shown in FIG. 12A, when the user inputs a voice command 1201 such as a "movie time," the GUI processor 230 displays, as shown in FIG. 12B, the executable application program list 1205 corresponding to the "movie time" voice command 1201 on the display unit 160. At this time, the GUI processor 230 arranges and displays the application program list 1205. In certain embodiments, the GUI processor 230 arranges and displays the application program list 1205 using at least one of a similar degree with the "movie time" voice command 1201, the frequency in execution of application programs, and a recent execution order of the application programs. For another example, the GUI processor 230 displays a picture of an application program executed by the voice recognition processor 210 on the display unit 160. More particularly, as shown in FIG. 12A, when the user inputs the voice command 1201 such as the "movie time," the GUI processor 230 displays, as shown in FIG. 12B, the picture of the "Movie Box" 1209 selected by the user on the executable application list 1205 corresponding to the "movie time" 1201 on the display unit 160.

In certain embodiments described above, the electronic device 100 includes the voice recognition control program 115 and the GUI program 114, which execute an application program according to a voice command input by the user in the program storing unit 111. Therefore, the processor 122 of the electronic device 100 executes a program included in the program storing unit 111 and executes an application program according to a voice command.

In certain embodiments, the electronic device 100 executes an application program according to a voice command input by the user using a processor that includes a voice recognition control program and a GUI program. More particularly, the processor 122 shown in FIG. 2 includes the voice recognition control program 115 and the GUI program 114.

FIG. 3 illustrates a detailed configuration of a processor according to embodiments of the present disclosure.

As shown in FIGs. 1 and 3, the processor 122 includes an application program selection processor 300, an application program driving processor 320, and a GUI processor 340.

The application program selection processor 300 executes the voice recognition program 118 of the program storing unit 111 and verifies an executable application program according to a voice command of the user, which is received from the microphone 132.

For example, as shown in FIG. 12A, when the user inputs a voice command 1201 such as "movie time," the application program selection processor 300 verifies, as shown in FIG. 12B, at least one executable application program 1205 corresponding to the input "movie time" voice command 1201. When the user selects any one of at least one executable application program through the input device 170, the application program selection processor 300 recognizes the application program selected by the user as an application program to be executed according to a voice command. Therefore, the application program selection processor 300 provides a voice command input by the user and information about the application program to be executed according to the voice command to the application program driving processor 320.

For another example, when there is an application program that has certain similarity or more with a voice command input by the user on a voice index list stored in the data storing unit 112, the application program selection processor 300 provides the voice command input by the user and information about an application program to be executed according to the voice command to the application program driving processor 320.

The application program driving processor 320 executes the voice recognition program 118 of the program storing unit 112 and executes an application program using the application program information received from the application program selection processor 320. For example, as shown in FIG. 12B, when a "Movie Box" 1209 on the executable application program list 1205 is selected by the user, the application program driving processor 320 executes the "Movie Box" 1209 using the application program information received from the application program selection processor 300.

In addition, the application program driving processor 320 executes the voice recognition program 118 of the program storing unit 112 and determines an additional service to be driven for the first time in an application program according to the voice command received from the application program selection processor 300. For example, as shown in FIG. 12B, when the picture of the "Movie Box" 1209 on the executable application program list 1205 is selected by the user, the application program driving processor 320 executes the "Movie Box" 1209 based on the "movie time" 1201 received from the application program selection processor 300, and determines an additional service to be driven for the first time.

The GUI processor 340 executes the GUI program 114 of the program storing unit 112 and provides a user interface between the user and the electronic device 100.

For one example, the GUI processor 340 displays the executable application program list selected by the application program selection processor 300 on the display unit 160. In more detail, as shown in FIG. 12A, when the user inputs the voice command 1201 such as the "movie time," the GUI processor 340 displays, as shown in FIG. 12B, the executable application program list 1205 corresponding to the "movie time" voice command 1201 on the display unit 160. At this time, the GUI processor 340 arranges and displays the application program list 1205. In certain embodiments, the GUI processor 340 arranges and displays the application program list 1205 based on at least one of a similar degree with the "movie time" 1201, the frequency in execution of application programs, and a recent execution order of application programs.

For another example, the GUI processor 340 displays a picture of an application program executed by the application program driving processor 320 on the display unit 160. More particularly, as shown in FIG. 12A, the user inputs the voice command 1201 such as the "movie time," the GUI processor 340 displays, as shown in FIG. 12B, the picture of the "Movie Box" 1209 on the executable application list 1205 selected by the user corresponding to the "movie time" voice command 1201 on the display unit 160. For another example, the GUI processor 340 displays a picture for an additional service to be driven for the first time in an application program on the display unit 160 using the voice command determined by the application program driving processor 320. In more detail, the GUI program 114 displays, as shown in FIG. 12B, a picture for an additional service to be driven for the first time in any one application program selected by the user on the executable application program list 1205 corresponding to the "movie time" voice command 1201 on the display unit 160.

In embodiments of the present disclosure described above, the electronic device 100 includes the voice recognition control program 115 and the GUI program 114, which provide a voice recognition service according to a voice command input by the user in the program storing unit 111. Therefore, the processor 122 shown in FIG. 3 executes a program included in the program storage unit 111 and executes an application program according to a voice command of the user.

In embodiments of the present disclosure, the electronic device 100 executes an application program according to a voice command input by the user using a processor including a voice recognition control program and a GUI program. The processor shown in FIG. 3 includes the voice recognition control program 115 and the GUI program 114.

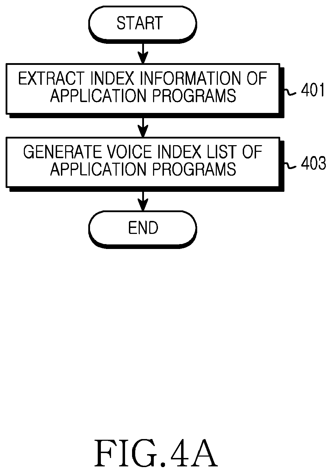

FIG. 4A illustrates process of generating a voice index list of application programs in an electronic device according to embodiments of the present disclosure.

Referring to FIGs. 1 and 4A, the electronic device extracts index information of application programs installed in the electronic device 100 in block 401. For one example, when a voice index list generation event is generated in the electronic device 100, the electronic device 100 extracts index information of application programs using the voice index list management program 119 of FIG. 1. For another example, when application programs are installed in the electronic device 100, the electronic device 100 extracts index information of the installed application programs. At this time, the electronic device 100 verifies whether to extract index information of the installed application programs. In certain aspects, the index information includes a title of an application program included in an application program package, voice index information of a previously defined application program, etc.

The electronic device 100 proceeds to block 403 and generates a voice index list of the application programs using the extracted index information of the application programs. In certain aspects, the voice index list includes at least one keyword for providing a voice recognition service. That is, the electronic device needs a voice index list to compare a voice command input by a user with a voice index and verify an application program to be executed.

Thereafter, the electronic device 100 ends the algorithm of FIG. 4A.

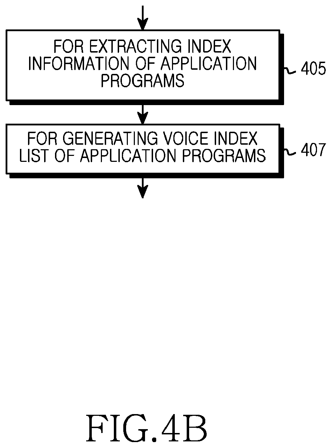

As described above, a process of generating a voice index list of application programs in the electronic device can be executed by, as shown in FIG. 4B, means for generating the voice index list of the application programs in the electronic device 100.

FIG. 4B illustrates a configuration of an electronic device for generating a voice index list of application programs in an electronic device according to aspects of the present disclosure.

Referring to FIGs. 1 and 4B, the electronic device 100 includes a first means 405 for extracting index information of application programs and a second means 407 for generating a voice index list of the application programs.

The first means 405 extracts the index information of the application programs installed in the electronic device. For one example, when a voice index list generation event is generated in the electronic device 100, the electronic device 100 extracts index information of application programs using the voice index list management program 119 shown in FIG. 1. For another example, when application programs 117 are installed in the electronic device 100, the electronic device can extract index information of the installed application programs. At this time, the electronic device verifies whether to extract the index information of the installed application programs. In certain aspects, the index information includes a title of an application program included in an application program package and voice index information of a previously defined application program, etc.

The second means 407 generates the voice index list of the application programs using the index information of the application programs, which is extracted by the first means 405. Herein, the voice index list includes at least one keyword for providing a voice recognition service. That is, the electronic device 100 needs a voice index list to compare a voice command input by a user with a voice index and verify an application program to be executed.

As described above, the electronic device includes the first 405 and second 407 means for generating the voice index list of the application programs. In certain embodiments, the electronic device 100 integrates the first 405 and second 407 means for generating the voice index list of the application programs to constitute one means.

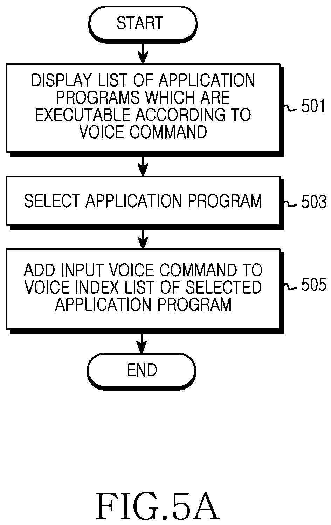

FIG. 5A illustrates a process of executing an application program using a voice command in an electronic device according to aspects of the present disclosure.

Referring to FIGs. 1 and 5A, when a voice command of a user is input through the microphone 132, the electronic device 100 displays at least one application program that is executable according to the voice command in block 501. For example, as shown in FIG. 12A, when the user inputs a voice command 1201 such as a "movie time," the electronic device 100 displays, as shown in FIG. 12B, an executable application program list 1205 corresponding to the "movie time" voice command 1201 on the display unit 160. In certain embodiments, the application program list 1205 includes the "movie time" voice command 1201 and similarity 1207 of voice indexes stored in the data storing unit 112. In certain aspects, the similarity 1207 is estimated using a similar degree between the voice command 1201 input by the user and a voice pattern of voice indexes stored in the data storing unit 112, the number of the same words between the voice command 1201 input by the user and voice indexes stored in the data storing unit 112, an order of the same words between the voice command input by the user and voice indexes stored in the data storing unit 112, etc.

The electronic device proceeds to block 503 and verifies whether any one application program on the application program list 1205 is selected by the user. For example, the electronic device 100 verifies, as shown in FIG. 12B, any one application program selected by the user on the executable application program list 1205 corresponding to the input "movie time" voice command 1201.

As described above, the electronic device 100 displays the list of application programs that are executable according to the voice command input by the user. The electronic device 100 verifies any one application selected by the user on the application program list. In addition, the electronic device 100 proceeds to block 505 and adds the voice command input in block 501 to a voice index list of the application program selected in block 503. For example, the electronic device 100 adds, as shown in FIG. 12B, the "movie time" voice command 1201 input by the user to a voice index list of the "Movie Box" 1209, which is an application program selected by the user.

Thereafter, the electronic device 100 ends the algorithm of FIG. 5A.

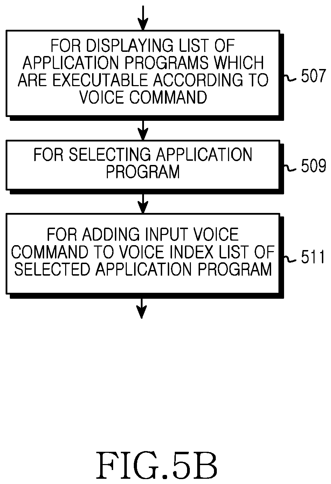

As described above, the process of executing the application program using the voice command in the electronic device 100 can be executed, as shown in FIG 5B, in means for executing the application program using the voice command in the electronic device 100.

FIG. 5B illustrates a configuration of an electronic device for executing an application program using a voice command the electronic device according to aspects of the present disclosure.

Referring to FIGs. 1 and 5B, the electronic device 100 includes a first means 507 for displaying an application program list according to a voice command and a second means 509 for verifying whether an application program on the application program list is selected.

When a voice command of a user is input through the microphone 132 of the electronic device, the first means 507 displays at least one application program that is executable according to the voice command. For example, as shown in FIG. 12A, when the user inputs a voice command 1201 such as a "movie time," the electronic device 100 displays, as shown in FIG. 12B, an executable application program list 1205 corresponding to the "movie time" voice command 1201 on the display unit 160. In certain aspects, the application program list 1205 includes the "movie time" voice command 1201 and similarity 1207 of voice indexes stored in the data storing unit 112. In certain aspects, the similarity 1207 is estimated based on a similar degree between the voice command input by the user and a voice pattern of voice indexes stored in the data storing unit 112, the number of the same words between the voice command input by the user and voice indexes stored in the data storing unit 112, an order of the same words between the voice command input by the user and voice indexes stored in the data storing unit 112, etc.

The second means 509 verifies whether any one application program on the application program list 1205 is selected by the user according to the voice command input by the first means 507. For example, the electronic device 100 verifies, as shown in FIG. 12B, any one application program selected by the user on the executable application program list 1205 corresponding to the input "movie time" voice command 1201.

In certain aspects the electronic device includes a third means 511 capable of adding the voice command input by the first means 507 to a voice index list of the application program selected in the second means 509. For example, the electronic device 100 adds, as shown in FIG. 12B, the "movie time" voice command 1201 input by the user to a voice index list of the "Movie Box" 1209, which is an application program selected by the user.

As described above, the electronic device 100 includes the first to third means 507-511 for displaying the application program list using the voice command. In certain embodiments, the electronic device 100 integrates the first to third means 507-511 for displaying the application program list using the voice command to constitute one means.

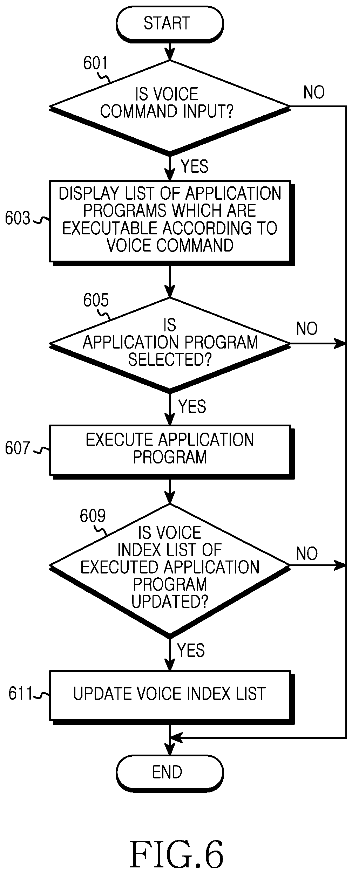

FIG. 6 illustrates a process of executing an application program using a voice command in an electronic device according to embodiments of the present disclosure.

Referring to FIGs. 1 and 6, the electronic device 100 verifies whether a voice command is input in block 601. For one example, the electronic device 100 verifies whether a voice command is input by a user using the microphone 132 of the audio processing unit 130 shown in FIG. 1. For another example, the electronic device 100 verifies whether a voice command is input into the electronic device 100 using an external microphone (e.g., a headset or a Bluetooth earpiece) connected by wire or wirelessly. If the voice command is not input, the electronic device 100 ends the algorithm of FIG. 6.

On the other hand, when the voice command is input, the electronic device proceeds to block 603 and displays at least one executable application corresponding to the voice command input in block 601. For example, as shown in FIG. 12A, when the user inputs a voice command 1201 such as a "movie time." the electronic device 100 displays, as shown in FIG. 12B, an executable application program list 1205 corresponding to the "movie time" voice command 1201 on the display unit 160. In certain embodiments, the application program list 1205 includes the "movie time" voice command 1201 and similarity 1207 of voice indexes stored in the data storing unit 112. In certain embodiments, the similarity 1207 can be estimated using a similar degree between the voice command input by the user and a voice pattern of voice indexes stored in the data storing unit 112, the number of the same words between the voice command input by the user and voice indexes stored in the data storing unit 112, an order of the same words between the voice command input by the user and voice indexes stored in the data storing unit 112, etc.

The electronic device proceeds to block 605 and verifies whether any one application program on the application program list 1205 is selected by the user. For example, the electronic device verifies, as shown in FIG. 12B, whether any one application program is selected by the user on the executable application program list 1205 corresponding to the input "movie time" 1201. If the application program is not selected, the electronic device ends the algorithm of FIG. 6.

On the other hand, when the application program is selected, the electronic device proceeds to block 607 and executes the application program selected in block 605. For example, as shown in FIG. 12B, when a picture of a "Movie Box" 1209 on the executable application program list 1205 is selected by the user, the electronic device executes the selected "Movie Box" 1209.

As described above, the electronic device displays an executable application program list 1205 according to the voice command 1201 input by the user. The electronic device 100 executes any one application program selected on the application program list 1205 by the user. In addition, the electronic device proceeds to block 609 and verifies whether to update a voice index list of the application program executed in block 607.

For one example, when the "Movie Box" 1209 on the application list 1205 is executed in response to the selection of the user, the electronic device verifies whether there is the "movie time" voice command 1201 on a voice index list of the "Movie Box" 1209. When there is no "movie time" voice command 1201 on the voice index list of the "Movie Box" 1209, the electronic device determines that the voice index list of the "Movie Box" 1209 is to be updated.

For another example, when a voice index list of an application program executed in the electronic device and a voice command input by the user are estimated to be more than predetermined reference similarity, the electronic device 100 recognizes that the voice index list of the executed application program is updated. For another example, the electronic device 100 can verify whether a voice index list of an application program is updated through a pop-up window. If the voice index list of the application program executed in the electronic device 100 will not be updated, the electronic device ends the algorithm of FIG. 6.

When the voice index list will be updated, the electronic device proceeds to block 611 and updates the voice index list. For example, the electronic device 100 adds, as shown in FIG. 12A, the input "movie time" voice command 1201 to the voice index list of the "Movie Box" 1209 selected on the application program list 1205 shown in FIG. 12B.

Thereafter, the electronic device ends the algorithm of the FIG. 6.

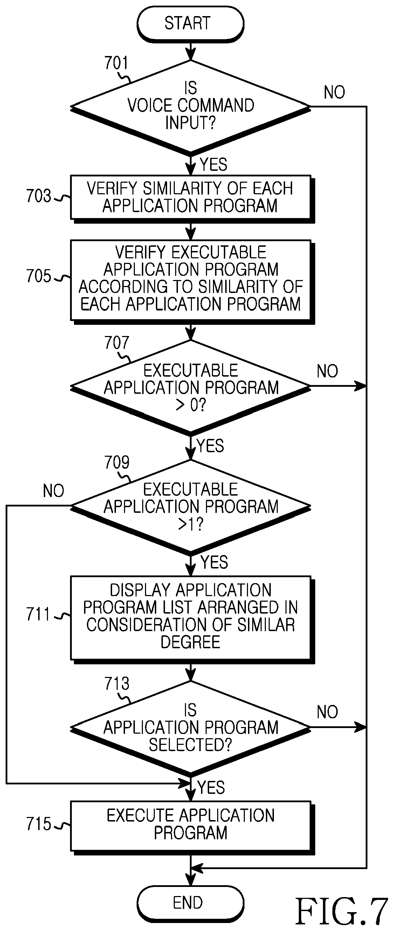

FIG. 7 illustrates process of executing an application program using a voice command in an electronic device according to embodiments of the present disclosure.

Referring to FIGs. 1 and 7, the electronic device 100 verifies whether a voice command is input in block 701. For one example, the electronic device 100 verifies whether a voice command is input by a user using the microphone 132 of the audio processing unit 130 shown in FIG. 1. For another example, the electronic device can verify whether a voice command is input thereto using an external microphone (e.g., a headset or a Bluetooth earpiece) connected by wire or wirelessly. If the voice command is not input, the electronic device ends the algorithm of FIG. 7.

On the other hand, when the voice command is input, the electronic device proceeds 100 to block 703 and verifies similarity between the voice command input in block 701 and each application program. For example, as shown in FIG. 12A, when a voice command 1201 such as a "movie time" is input, the electronic device compares the "movie time" voice command 1201 with a voice index of each application program installed within the electronic device 100 and indicates the compared result as a numeric value.

The electronic device 100 proceeds to block 705 and verifies an executable application program according to the similarity of each application program. For example, when the electronic device 100 selects to execute application programs that have a similarity of 70% or more, the electronic device verifies similarity of each application program and verifies the application programs whose similarity is 70% or more.

The electronic device 100 proceeds to block 707 and verifies whether there is an executable application program. For example, the electronic device verifies whether there is an application program that has a similarity of 70% or more. If there is no such executable application program, the electronic device ends the algorithm of FIG. 7.

On the other hand, when there is an executable application program, which has a similarity of 70% or more, the electronic device proceeds to block 709 and determines whether the number of the executable application programs is greater than 1. For example, the electronic device 100 determines whether the number of application programs that have a similarity of 70% or more is greater than 1. If the number of the executable application programs, which have a similarity of 70% or more is not greater than 1, the electronic device recognizes that there is one executable application program. Therefore, the electronic device proceeds to block 715 and executes that one application program.

On the other hand, when there are one or more executable application programs, the electronic device proceeds to block 711 and displays an application program list arranged based on a similar degree. For example, as shown in FIG. 12A, a voice command 1201 such as a "movie time" is input, the electronic device displays, as shown in FIG. 12B, an application program list 1205, that has a similarity 1207 of 70% or more, corresponding to the "movie time" voice command 1201 on the display unit 160. At this time, the electronic device 100 arranges and displays application programs in descending order according to a similar degree. Also, the electronic device 100 can arrange and display application programs in ascending order according to a similar degree.

The electronic device proceeds to block 713 and verifies whether any one application program is selected on the application program list by the user. For example, the electronic device verifies, as shown in FIG. 12B, whether any one application program is selected by the user on the executable application program list 1205 corresponding to the input "movie time" voice command 1201. If the application program is not selected, the electronic device ends the algorithm of FIG. 7.

On the other hand, when the application program is selected, the electronic device proceeds to block 715 and executes the selected application program. For example, as shown in FIG. 12B, when a "Movie Box" 1209 on the executable application list 1205 is selected by the user, the electronic device 100 executes the selected "Movie Box" 1209.

Thereafter, the electronic device ends the algorithm of FIG. 7.

In certain embodiments of the present disclosure described above, the electronic device 100 arranges the application program list automatically using a similar degree.

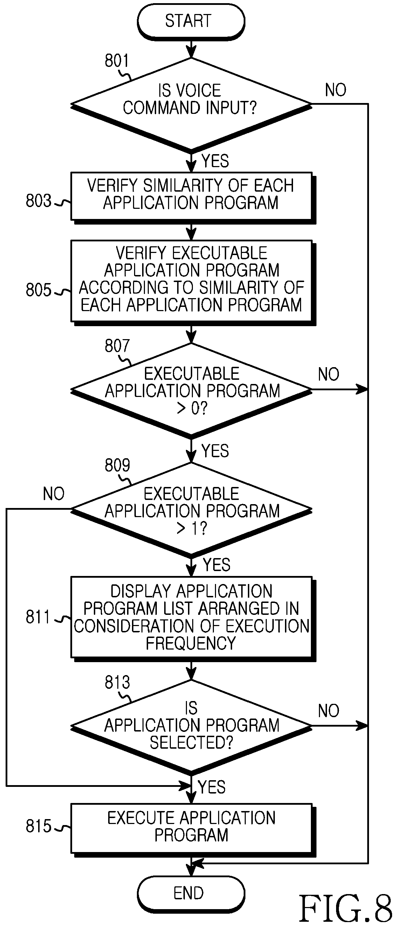

In certain embodiments of the present disclosure, the electronic device 100 arranges, as show in FIG. 8, an application program list automatically based on execution frequency.

FIG. 8 illustrates process of executing an application program using a voice command in an electronic device according to embodiments of the present disclosure.

Referring to FIGs. 1 and 8, the electronic device verifies whether a voice command is input in block 801. For one example, the electronic device 100 verifies whether a voice command is input by a user using the microphone 132 of the audio processing unit 130 shown in FIG. 1. For another example, the electronic device verifies whether a voice command is input into the electronic device 100 using an external microphone (e.g., a headset or a Bluetooth earpiece) connected by wire or wirelessly. If the voice command is not input, the electronic device ends the algorithm of FIG. 8.

On the other hand, when the voice command is input, the electronic device proceeds to block 803 and verifies similarity between the voice command input in block 801 and each application program. For example, as shown in FIG. 12A, when a voice command 1201 such as "movie time" 1201 is input, the electronic device compares the "movie time" voice command 1201 with a voice index of each application program installed in the electronic device 100 and indicates the compared result as a numeric value.

The electronic device 100 proceeds to block 805 and verifies an executable application program according to the similarity of each application program. For example, when the electronic device selects to execute application programs having a similarity of 70% or more, the electronic device 100 verifies similarity of each application program and verifies the application programs having a similarity of 70% or more.

The electronic device proceeds to block 807 and verifies whether there is an executable application program. For example, the electronic device 100 determines whether there is an application program having a similarity of 70% or more. If there is no executable application program having a similarity of 70% or more, the electronic device ends the algorithm of FIG. 8.

On the other hand, when there is an executable application program, the electronic device proceeds to block 809 and determines whether the number of the executable application programs is greater than 1. For example, the electronic device 100 determines whether the number of application programs having a similarity of 70% or more is greater than 1. If the number of the executable application programs is not greater than 1, the electronic device 100 determines that there is one executable application program. In response, the electronic device proceeds to block 815 and executes the application program.

On the other hand, when there are one or more executable application programs, the electronic device proceeds to block 811 and displays an application program list arranged according to execution frequency. For example, as shown in FIG. 12A, the voice command 1201 such as "movie time" is input, the electronic device 100 displays, as shown in FIG. 12B, an application program list 1205 corresponding to the "movie time" voice command 1201 on the display unit 160, the application program list 1205 having a similarity 1207 of 70% or more. At this time, the electronic device 100 arranges and displays application programs in descending order according to execution frequency. Also, the electronic device can arrange and display application programs in ascending order according to execution frequency. In certain embodiments, the execution frequency can be the number of executions of each application program using a voice command or the number of executions of each application program not using a voice command.

The electronic device 100 proceeds to block 813 and verifies whether any one application program is selected on the application program list by the user. For example, the electronic device verifies, as shown in FIG. 12B, whether any one application program on the executable application program list 1205 corresponding to the input "movie time" 1201 is selected by the user. If the application program is not selected, the electronic device ends the algorithm of FIG. 8.

On the other hand, when the application program is selected, the electronic device proceeds to block 815 and executes the application program selected in block 813. For example, as shown in FIG. 12B, when a "Movie Box" 1209 on the executable application list 1205 is selected by the user, the electronic device executes the selected "Movie Box" 1209.

Thereafter, the electronic device ends the algorithm of FIG. 8.

In certain embodiments of the present disclosure described above, the electronic device 100 arranges the application program list automatically in consideration of execution frequency.

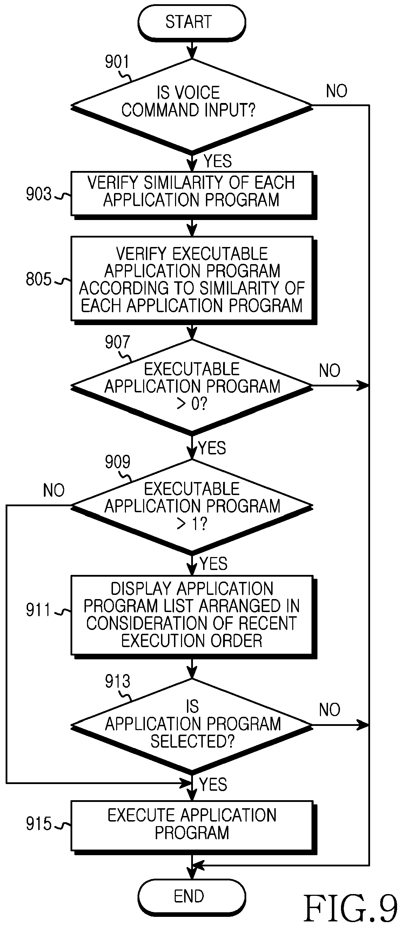

In certain embodiments of the present disclosure, the electronic device 100 arranges, as show in FIG. 9, an application program list 1205 automatically based on a recent execution order.

FIG. 9 illustrates process of executing an application program using a voice command in an electronic device according to embodiments of the present disclosure.

Referring to FIGs. 1 and 9, the electronic device 100 determines whether a voice command is input in block 901. For one example, the electronic device verifies whether a voice command is input by a user using the microphone 132 of the audio processing unit 130 shown in FIG. 1. For another example, the electronic device verifies whether a voice command is input into the electronic device 100 using an external microphone (e.g., a headset or a Bluetooth earpiece) connected by wire or wirelessly. If the voice command is not input, the electronic device ends the algorithm of FIG. 9.

On the other hand, when the voice command is input, the electronic device proceeds to block 903 and verifies similarity between the voice command input in block 901 and each application program. For example, as shown in FIG. 12A, when a voice command 1201 such as "movie time" is input, the electronic device 100 compares the "movie time" voice command 1201 with a voice index of each application program installed in the electronic device 100 and indicates the compared result as a numeric value.

The electronic device proceeds to block 905 and verifies an executable application program according to the similarity of each application program. For example, when the electronic device 100 selects to execute application programs having a similarity of 70% or more, the electronic device 100 verifies similarity of each application program and determines the application programs having a similarity of 70% or more.

The electronic device 100 proceeds to block 907 and verifies whether there is an executable application program. For example, the electronic device 100 determines whether there is an application program that has a similarity that is 70% or more. If there is no such executable application program, the electronic device ends the algorithm of FIG. 9.

On the other hand, when there is the executable application program, the electronic device proceeds to block 909 and verifies whether the number of the executable application programs is greater than 1. For example, the electronic device determines whether the number of application programs having a similarity that is 70% or more is greater than 1. If the number of the executable application programs is not greater than 1, the electronic device recognizes that there is one executable application program. Therefore, the electronic device proceeds to block 915 and executes the application program.

On the other hand, when there are one or more executable application programs, the electronic device proceeds to block 911 and displays an application program list arranged based on a similar degree. For example, as shown in FIG. 12A, a voice command 1201 such as a "movie time" is input, the electronic device displays, as shown in FIG. 12B, an application program list 1205, having a similarity 1207 that is 70% or more, corresponding to the "movie time" voice command 1201 on the display unit 160. At this time, the electronic device arranges and displays application programs in descending order according to a recent execution sequence. Also, the electronic device has the capability to arrange and display application programs in ascending order according to a recent execution order. In certain embodiments, the recent execution order can be a time order when executing each application program using a voice command or a time order when executing each application program not using a voice command.

The electronic device proceeds to block 913 and verifies whether any one application program is selected on the application program list by the user. For example, the electronic device verifies, as shown in FIG. 12B, whether any one application program on the executable application program list 1205 corresponding to the input "movie time" 1201 is selected by the user. If the application program is not selected, the electronic device ends the algorithm of FIG. 9.

On the other hand, when the application program is selected, the electronic device proceeds to block 915 and executes the application program selected in block 913. For example, as shown in FIG. 12B, when a "Movie Box" 1209 on the executable application list 1205 is selected by the user, the electronic device executes the selected "Movie Box" 1209.

Thereafter, the electronic device ends the algorithm of FIG. 9.

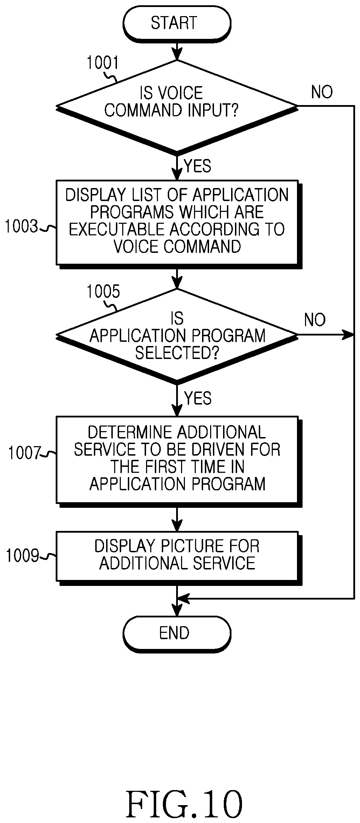

FIG. 10 illustrates process of executing an application program using a voice command in an electronic device according to embodiments of the present disclosure.

Referring to FIGs. 1, 3, and 10, the electronic device verifies whether a voice command is input in block 1001. For one example, the electronic device verifies whether a voice command is input by a user using the microphone 132 of the audio processing unit 130 shown in FIG. 1. For another example, the electronic device 100 verifies whether a voice command is input in the electronic device 100 using an external microphone (e.g., a headset or a Bluetooth earpiece) connected by wire or wirelessly. If the voice command is not input, the electronic device ends the algorithm of FIG. 10.

On the other hand, when the voice command is input, the electronic device proceeds to block 1003 and displays at least one executable application corresponding to the voice command input in block 1001. For example, as shown in FIG. 12A, when a voice command 1201 such as a "movie time" is input, the electronic device displays, as shown in FIG. 12B, an executable application program list 1205 corresponding to the "movie time" 1201 on the display unit 160. Herein, the electronic device arranges, as shown in FIGs 7 to 9, the application program list 1205 based on at least one of a similar degree, execution frequency, and a recent execution order.

The electronic device proceeds to block 1005 and verifies whether any one application program is selected on the application program list by the user. For example, the electronic device determines, as shown in FIG. 12B, whether any one application program on the executable application program list 1205 corresponding to the input "movie time" 1201 is selected by the user. If the application program is not selected, the electronic device ends the algorithm of FIG. 10.

On the other hand, when the application program is selected, the electronic device proceeds to block 1007 and determines an additional service to be driven for the first time in the application program selected in block 1005 based on the voice command input in block 1001. For example, as shown in FIG. 12B, a "Movie Box" 1209 on the executable application program list 1205 is selected by the user, the application program selection processor 300 transmits the "movie time" voice command 1201 input in block 1001 and information about an application program to be executed to the application program driving processor 320. The application program driving processor 320 executes the "Movie Box" 1209 based on the "movie time" 1201 and the information about the application program to be executed, which are received from the application program selection processor 300, and determines the additional service to be driven for the first time.

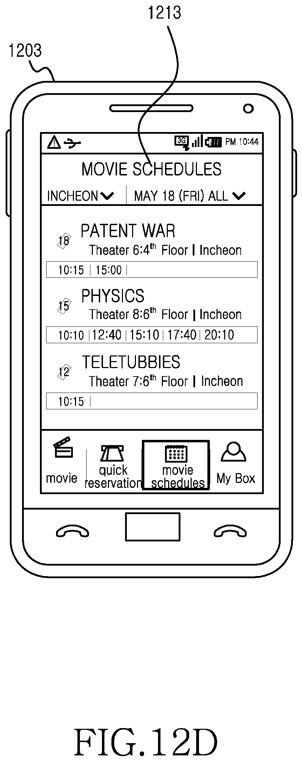

The electronic device proceeds to block 1009 and displays a picture of the additional service determined in block 1007. For example, as shown in FIG. 12D, the electronic device 100 displays a "movie schedule" 1213 of the "Movie Box" 1209 on the display unit 160 based on the "movie time" voice command 1201 input in block 1001.

Thereafter, the electronic device ends the algorithm of the FIG. 10.

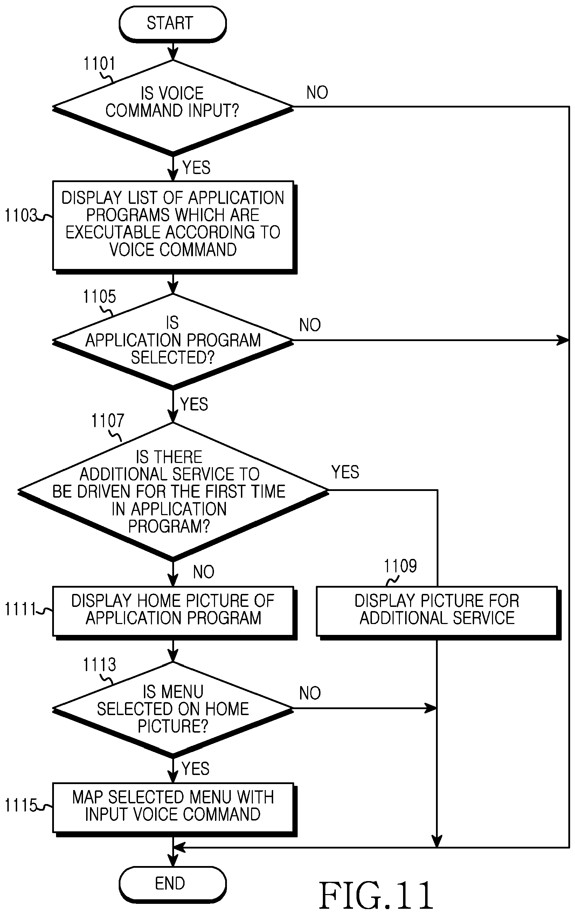

FIG. 11 illustrates process of executing an application program using a voice command in an electronic device according to embodiments of the present disclosure.

Referring to FIGs. 1 and 11, the electronic device 100 verifies whether a voice command is input in block 1101. For one example, the electronic device verifies whether a voice command is input by a user using the microphone 132 of the audio processing unit 130 shown in FIG. 1. For another example, the electronic device can verify whether a voice command is input thereto using an external microphone (e.g., a headset or a Bluetooth earpiece) connected by wire or wirelessly. If the voice command is not input, the electronic device ends the algorithm of FIG. 11.

On the other hand, when the voice command is input, the electronic device proceeds to block 1103 and displays at least one executable application corresponding to the voice command input in block 1101. For example, as shown in FIG. 12A, when a voice command 1201 such as a "movie time" is input, the electronic device displays, as shown in FIG. 12B, an executable application program list 1205 corresponding to the "movie time" voice command 1201 on the display unit 160. In certain embodiments, the electronic device arranges, as shown in FIGs 7 to 9, the application program list 1205 using at least one of a similar degree, execution frequency, and a recent execution order.

The electronic device proceeds to block 1105 and determines whether any one application program is selected on the application program list by the user. For example, the electronic device 100 verifies, as shown in FIG. 12B, whether any one application program on the executable application program list 1205 corresponding to the input "movie time" 1201 is selected by the user. If the application program is not selected, the electronic device ends the algorithm of FIG. 11.

On the other hand, when the application program is selected, the electronic device proceeds to block 1107 and verifies whether there is an additional service to be driven for the first time in the application program selected in block 1105 based on the voice command input in block 1101. For example, as shown in FIG. 12B, a "Movie Box" 1209 on the executable application program list 1205 is selected by the user, the electronic device executes the "Movie Box" 1209 in response to the "movie time" voice command 1201 input by the user and determines whether there is an additional service to be driven for the first time.

If there is the additional service to be driven for the first time, the electronic device proceeds to block 1109 and displays a picture of the additional service in the application program selected in block 1105 based on the voice command input in block 1101. For example, as shown in FIG. 12D, the electronic device displays a "movie schedule" 1213 of the "Movie Box" 1209 corresponding to the "movie time" 1201 input by the user on the display unit 160.

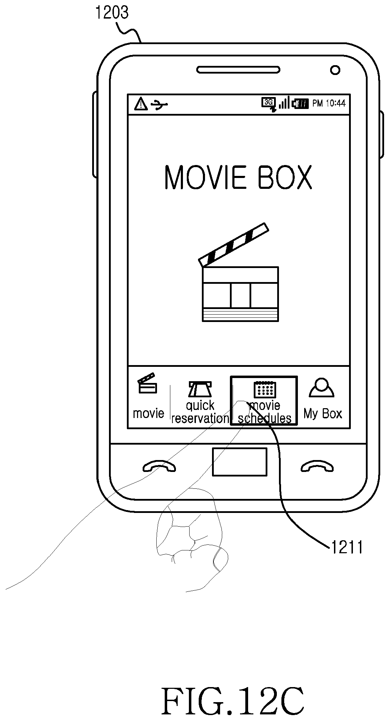

On the other hand, when there is no additional service to be driven for the first time, the electronic device proceeds to block 1111 and displays a home picture of the selected application program. For example, as shown in FIG. 12B, when the "Movie Box" 1209 on the executable application program list 1205 is selected by the user, the electronic device displays, as shown in FIG. 12C, a home picture of the "Movie Box" 1209 on the display unit 160.

The electronic device proceeds to block 1113 and verifies whether a menu is selected on the home picture of the application program. For example, the electronic device verifies, as shown in FIG. 12C, a menu selected by the user on the home picture of the "Movie Box" 1209 displayed on the display unit 160. If the menu is not selected on the home picture of the application program, the electronic device ends the algorithm of the FIG. 11.

On the other hand, when the menu is selected on the home picture of the application program, the electronic device proceeds to block 1115 and maps the selected menu with the input voice command. At this time, the electronic device displays, as shown in FIG. 12D, a movie schedule 1213 selected by the user on the display unit 160. For example, as shown in FIG. 12C, when the "movie schedule" 1211 is selected on the home picture of the "Movie Box" 1209 by the user, the electronic device executes the "Movie Box" 1209 in response to the "movie time" voice command 1201 input by the user and recognizes the "movie schedule" 1211 as an additional service to be driven for the first time.

Thereafter, the electronic device ends the algorithm of the FIG. 11.

As described above, there is an advantage in that the electronic device 100 provides a voice recognition service for various voice commands by automatically generating a voice index list using index information of an application program.

Also, there is an advantage in that the electronic device 100 enhances accuracy for providing a voice recognition service by displaying a list of application programs, which are executable according to a voice command input by the user.

Also, there is an advantage in that the electronic device 100 can reflect a tendency of the user and can provide a voice recognition service by arranging and displaying a list of application programs, which are executable according to a voice command input by the user.

Also, there is an advantage in that the electronic device 100 provides a voice recognition service for various voice commands by automatically updating a voice index list of an executed application program when the application program corresponding to a voice command input by the user is executed.

Also, there is an advantage in that the electronic device can reflect tendency of the user and can provide a voice recognition service by determining an additional service to be driven for the first time in an application program based on a voice command input by the user.

In another embodiment, an electronic device can perform authentication for accessing a data network whenever the electronic device accesses a service providing node.

It will be appreciated that embodiments of the present disclosure according to the claims and description in the specification can be realized in the form of hardware, software, or a combination of hardware and software.

Any such software can be stored in a computer readable storage medium. The computer readable storage medium stores one or more programs (software modules). The one or more programs comprising instructions which, when executed by one or more processors in an electronic device, cause the electronic device to perform a method of the present disclosure.

As such software can be stored in the form of volatile or non-volatile storage such as, for example, a storage device like a ROM, whether erasable or rewritten or not, or in the form of memory such as, for example, RAM, memory chips, device or integrated circuits or on an optically or magnetically readable memory such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, embodiments provide a program comprising code for implementing apparatus or a method as claimed in any one of the claims of this specification and a machine-readable storage storing such a program. Still further, such programs can be conveyed electronically via any medium such as a communication signal carried over a wired or wireless connection and embodiments suitably encompass the same.

While the present invention has been particularly shown and described with reference to embodiments thereof, it will be understood by those skilled in the art that various changes in form and details may be made therein without departing from the scope of the present disclosure as defined by the appended claims.

## Claims

1. A method of providing a voice recognition service, the method comprising:
receiving (601) a voice command (1201) from a microphone (131);
determining (803) similarity between the voice command (1201) and a voice index of each application program;
determining (805) an executable application program according to the similarity;
determining an execution of an application program when a single application program is determined;
displaying (811) an application list corresponding to executable application programs when a plurality of the executable application programs is determined;
determining an execution of an application program selected from the application list, when the application program is selected by a user;
determining (1007) an additional service associated with the voice command (1201) on the determined application, in response to the execution determination of the application program;
when the additional service associated with the voice command (1201) from the application program is determined (1107), displaying (1109) a picture of the application program including the additional service associated with the voice command (1201); and
displaying a home picture of the selected application program when there is no additional service corresponding to the voice command (1201) and mapping the voice command with the additional service when any one additional service is selected on the home picture of the application.

2. The method of claim 1, wherein the determining the executable application program comprises:
determining the number of application programs which are executable according to the voice command (1201),
wherein the displaying of the application programs comprises displaying a plurality of application programs when there are the plurality of application programs which are executable according to the voice command (1201).

3. The method of claim 2, wherein the displaying the plurality of application programs comprises:
arranging the plurality of application programs which are executable according to similarity between the voice command (1201) and the voice index of the application programs; and
displaying the plurality of arranged application programs.

4. The method of claim 1, further comprising adding the voice command (1201) to a voice index list of a selected application program when the any one of the application programs is selected.

5. An electronic device (100) comprising a processor unit (120), a microphone (132) and a display unit (160), wherein the electronic device (100) is configured to perform the method of any one of claims 1 to 4.

6. A computer program product directly loadable into a memory of a programmable device, comprising software code portions for causing an electronic device having a processor, a microphone, and a display to perform the steps of a method according to any of the claims 1 to 4 when said product is run on the device.

## Patentansprüche

1. Verfahren zum Bereitstellen eines Spracherkennungsdienstes, wobei das Verfahren Folgendes umfasst:
Empfangen (601) eines Sprachbefehls (1201) von einem Mikrofon (131);
Bestimmen (803) einer Ähnlichkeit zwischen dem Sprachbefehl (1201) und einem Sprachindex jedes Anwendungsprogramms;
Bestimmen (805) eines ausführbaren Anwendungsprogramms gemäß der Ähnlichkeit;
Bestimmen einer Ausführung eines Anwendungsprogramms, wenn ein einzelnes Anwendungsprogramm bestimmt wird;
Anzeigen (811) einer Anwendungsliste, die ausführbaren Anwendungsprogrammen entspricht, wenn eine Vielzahl ausführbarer Anwendungsprogramme bestimmt werden;
Bestimmen einer Ausführung eines aus der Anwendungsliste ausgewählten Anwendungsprogramms, wenn das Anwendungsprogramm durch einen Benutzer ausgewählt wird;
Bestimmen (1007) eines zusätzlichen Dienstes, der dem Sprachbefehl (1201) in der bestimmten Anwendung zugeordnet ist, als Reaktion auf die Ausführungsbestimmung des Anwendungsprogramms;
wenn der zusätzliche Dienst, der dem Sprachbefehl (1201) aus dem Anwendungsprogramm zugeordnet ist, bestimmt wird (1107), Anzeigen (1109) eines Bildes des Anwendungsprogramms einschließlich des zusätzlichen Dienstes, der dem Sprachbefehl (1201) zugeordnet ist; und
Anzeigen eines Start-Bildes des ausgewählten Anwendungsprogramms, wenn kein zusätzlicher Dienst vorhanden ist, der dem Sprachbefehl (1201) entspricht, und Zuordnen des Sprachbefehls zum zusätzlichen Dienst, wenn auf dem Start-Bild der Anwendung einer der zusätzlichen Dienste ausgewählt wird.

2. Verfahren nach Anspruch 1, wobei das Bestimmen des ausführbaren Anwendungsprogramms Folgendes umfasst:
Bestimmen der Anzahl von Anwendungsprogrammen, welche gemäß dem Sprachbefehl (1201) ausführbar sind, wobei das Anzeigen der Anwendungsprogramme das Anzeigen einer Vielzahl Anwendungsprogramme umfasst, wenn die Vielzahl Anwendungsprogramme vorhanden sind, welche gemäß dem Sprachbefehl (1201) ausführbar sind.

3. Verfahren nach Anspruch 2, wobei das Anzeigen der Vielzahl von Anwendungsprogrammen Folgendes umfasst:
Anordnen der Vielzahl Anwendungsprogramme, welche gemäß der Ähnlichkeit zwischen dem Sprachbefehl (1201) und dem Sprachindex der Anwendungsprogramme ausführbar sind; und
Anzeigen der Vielzahl angeordneter Anwendungsprogramme.

4. Verfahren nach Anspruch 1, das ferner das Hinzufügen des Sprachbefehls (1201) zu einer Sprachindexliste eines ausgewählten Anwendungsprogramms umfasst, wenn das irgendeine der Anwendungsprogramme ausgewählt wird.

5. Elektronische Vorrichtung (100), die eine Prozessoreinheit (120), ein Mikrofon (132) und eine Anzeigeeinheit (160) umfasst, wobei die elektronische Vorrichtung (100) konfiguriert ist, um das Verfahren nach einem der Ansprüche 1 bis 4 durchzuführen.

6. Computerprogrammprodukt, das direkt in einen Speicher einer programmierbaren Vorrichtung ladbar ist, das Software-Codeabschnitte zum Bewirken umfasst, dass eine elektronische Vorrichtung mit einem Prozessor, einem Mikrofon und einer Anzeige die Schritte eines Verfahrens gemäß einem der Ansprüche 1 bis 4 durchführt, wenn das Produkt auf der Vorrichtung ausgeführt wird.

## Revendications

1. Méthode de fourniture d'un service de reconnaissance vocale, la méthode comprenant :
la réception (601), d'un micro (131), d'une commande vocale (1201) ;
la détermination (803) d'une similitude entre la commande vocale (1201) et un indice vocal de chaque programme d'application ;
la détermination (805) d'un programme d'application exécutable conforme à la similitude ;
la détermination d'une exécution d'un programme d'application lors de la détermination d'un programme d'application individuel ;
l'affichage (811) d'une liste d'applications correspondant à des programmes d'application exécutables, lors de la détermination d'une pluralité des programmes d'application exécutables ;
la détermination d'une exécution d'un programme d'application sélectionné dans la liste d'applications, lors de la sélection du programme d'application par un utilisateur ;
la détermination (1007) d'un service additionnel associé à la commande vocale (1201) sur l'application déterminée, en réponse à la détermination de l'exécution du programme d'application ;
lorsque le service additionnel associé à la commande vocale (1201) depuis le programme d'application est déterminé (1107), l'affichage (1109) d'une image du programme d'application, y compris le service additionnel associé à la commande vocale (1201) ; et
l'affichage d'une image d'accueil du programme d'application sélectionné, lorsqu'il n'y a aucun service additionnel correspondant à la commande vocale (1201), et le mappage de la commande vocale avec le service additionnel, lorsqu'un service additionnel quelconque est sélectionné sur l'image d'accueil de l'application.

2. Méthode selon la revendication 1, la détermination du programme d'application exécutable comprenant :
la détermination du nombre du programmes d'application exécutables d'après la commande vocale (1201), l'affichage des programmes d'application comprenant l'affichage d'une pluralité de programmes d'application, lorsqu'il y a la pluralité de programmes d'application qui sont exécutables d'après la commande vocale (1201).

3. Méthode selon la revendication 2, l'affichage de la pluralité de programmes d'application comprenant :
l'agencement de la pluralité de programmes d'application qui sont exécutables d'après la similitude entre la commande vocale (1201) et l'indice vocal des programmes d'application ; et
l'affichage de la pluralité de programmes d'application agencée.

4. Méthode selon la revendication 1, comprenant en outre l'adjonction de la commande vocale (1201) à une liste d'indices vocaux d'un programme d'application sélectionné, lorsqu'est sélectionné un quelconque des programmes d'application.

5. Appareil électronique (100) comprenant un processeur (120), un micro (132), et un dispositif d'affichage (160), l'appareil électronique (100) étant configuré pour l'exécution de la méthode selon une quelconque des revendications 1 à 4.

6. Programme informatique, pouvant être chargé directement dans une mémoire d'un appareil programmable, comprenant des parties de code logiciel pour donner lieu à l'exécution, par un appareil électronique comprenant un processeur, un micro, et un dispositif d'affichage, des étapes d'une méthode selon une quelconque des revendications 1 à 4, lors de l'exécution dudit programme sur l'appareil.
